# FASCICULE DE BREVET EUROPEEN

(11) **EP 2 150 426 B1**
(45) Date de publication et mention de la délivrance du brevet: **07.12.2011**
(21) Numéro de dépôt: 08805924.1
(22) Date de dépôt: 03.06.2008
(51) Int. Cl.: B60H 1/00

(54) **SYSTEME DE CLIMATISATION POUR UN VEHICULE POURVU DE MOYENS DE COMPENSATION DES MESURES D'UNE SONDE DE TEMPERATURE D'HABITACLE**
KLIMATISIERUNGSSYSTEM FÜR EIN FAHRZEUG MIT VORRICHTUNG ZUM AUSGLEICH DER MESSUNGEN EINER TEMPERATURSONDE IM INSASSENRAUM
AIR CONDITIONING SYSTEM FOR VEHICLE INCLUDING MEANS FOR COMPENSATING THE MEASURES OF A PASSENGER COMPARTMENT TEMPERATURE PROBE

(30) Priorité: 04.06.2007 FR 0703979
(43) Date de publication de la demande: 10.02.2010
(73) Titulaire: Renault S.A.S., 92100 Boulogne-Billancourt (FR)
(72) Inventeur: DENIAUD, Nicolas, F-78990 Elancourt (FR); NAVARRO, David, F-92210 Saint Cloud (FR); RIPOLL, Christophe, F-78220 Viroflay (FR)
(86) Numéro de dépôt international: PCT/FR2008/050981
(87) Numéro de publication internationale: WO 2008/152325

(56) Documents cités:
- EP-A- 1 340 635
- EP-A- 1 564 046
- FR-A- 2 862 912
- US-A1- 2002 053 601

## Description

L'invention concerne un système de climatisation pour un véhicule.

La climatisation tend à se généraliser dans les véhicules actuels et plus particulièrement la climatisation dite « régulée », qui permet à l'utilisateur de régler un niveau de confort souhaité en renseignant une consigne dans un module de commande de l'appareil de climatisation.

Un tel système de climatisation régulé se doit d'atteindre rapidement et de manière précise la consigne de confort quelque soit la température acquise par les éléments intérieurs du véhicule.

Dans certains systèmes, on divise la valeur de puissance à appliquer par le groupe de climatisation en au moins une valeur de puissance statique et une valeur de puissance dynamique.

La valeur de puissance statique représente la puissance thermique qu'il faut apporter à l'habitacle pour maintenir la température de consigne lorsque l'inertie thermique des éléments présents dans l'habitacle est faible, voire nulle, ou autrement dit lorsque les éléments présents dans l'habitacle sont sensiblement à la température visée.

La valeur de puissance dynamique représente la puissance thermique qu'il faut apporter à l'habitacle pour vaincre l'inertie thermique des éléments présents dans l'habitacle, tel une planche de bord, une console ou des sièges et ainsi faire converger la température de l'habitacle vers la température visée. Une fois la température de l'habitacle égale à la température visée, la valeur de la puissance dynamique doit devenir nulle, par régulation à partir d'un retour de la température mesurée dans l'habitacle par exemple au moyen d'une sonde de température intérieure. La régulation de la température à l'intérieur de l'habitacle est alors assurée par la valeur de puissance statique uniquement. EP 1340635 divulgue un système selon le préambule de la revendication 1.

Cependant, en raison d'erreurs de dérive ou de reproductibilité des mesures de température effectuées à l'intérieur de l'habitacle, la valeur de puissance dynamique peut tendre vers une valeur finie, non nulle.

La régulation de la climatisation perd alors en efficacité et devient délicate à stabiliser.

L'invention vise à améliorer les systèmes de l'art antérieur précédemment cités et se propose de remédier à leurs inconvénients, notamment de permettre la convergence de la valeur de puissance dynamique à puissance nulle.

C'est un objet de la présente invention que de proposer un système de climatisation pour un véhicule, le système comprenant un module de commande du groupe de climatisation pour réguler la température à l'intérieur d'un habitacle vers une température de consigne, ledit module de commande déterminant la température d'air soufflé à introduire dans l'habitacle en fonction d'un premier signal représentatif de la puissance thermique qu'il faut apporter pour maintenir l'habitacle à la température de consigne et d'un deuxième signal représentatif de la puissance thermique qu'il faut apporter à l'habitacle pour vaincre l'inertie thermique résultant d'au moins un élément dans l'habitacle, le système étant remarquable en ce qu'il comprend des moyens de compensation du deuxième signal contre des dérives provenant d'un moyen d'obtention de température à l'intérieur de l'habitacle comprenant un moyen d'addition de signaux pour l'addition d'un signal provenant du moyen d'obtention de température avec un signal d'erreur de convergence représentatif de l'erreur de convergence du deuxième signal pour obtenir un signal de température d'habitacle corrigé.

Suivant des modes particuliers de réalisation, le système de climatisation pour véhicule automobile comporte l'une ou plusieurs des caractéristiques suivantes :
- le signal d'erreur de convergence est régulé par un moyen de régulation, de préférence un filtre PID ;
- le signal d'erreur de convergence est obtenu par un comparateur faisant la différence entre un signal représentatif d'une valeur de convergence vers laquelle l'on souhaite faire converger le deuxième signal ;
- la valeur de convergence est stockée dans une mémoire du système de climatisation ;
- la valeur de convergence est une valeur constante, de préférence une valeur sensiblement nulle ;
- la valeur de convergence prend une valeur sensiblement nulle après un temps prédéterminé ;
- la valeur de convergence est déterminée au moyen d'une loi de commande comprenant comme paramètres au moins une température extérieure à l'habitacle et un délai courant depuis le changement de la température de consigne ;
- le deuxième signal est déterminé en fonction d'un signal d'erreur de consigne régulé par un moyen de régulation, de préférence un filtre PID, le signal d'erreur de consigne étant obtenu par comparaison dans un moyen de comparaison entre le signal de consigne et le signal de température d'habitacle corrigé.
Un autre objet de l'invention est un procédé de climatisation d'un habitacle de véhicule, dans lequel :
- on fixe une température de consigne;
- on détermine une valeur de puissance statique permettant de maintenir l'habitacle à la température de consigne;
- on détermine une valeur de puissance dynamique permettant de vaincre l'inertie thermique résultant d'au moins un élément dans l'habitacle;
- on applique ces valeurs de puissance statique et dynamique à un module de commande du groupe de climatisation;
- on mesure la température de l'habitacle à l'aide d'un moyen d'obtention de température à l'intérieur de l'habitacle pour adapter la valeur de puissance dynamique;
- on compense la valeur de puissance dynamique contre des dérives provenant du moyen d'obtention de température à l'intérieur de l'habitacle.

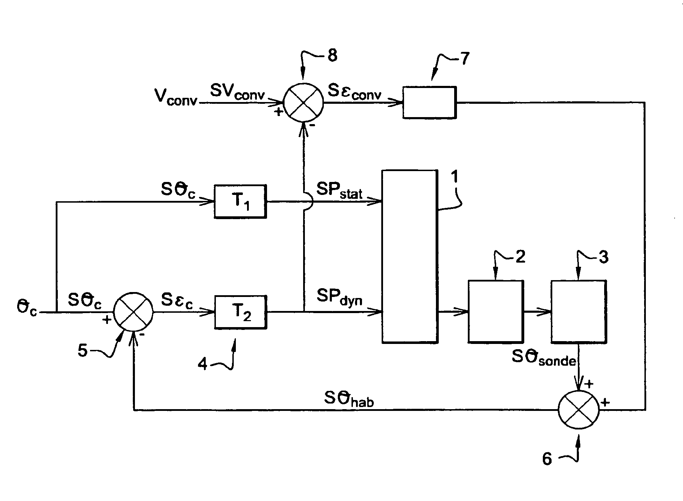

D'autres caractéristiques et avantages de l'invention apparaîtront clairement à la lecture de la description suivante du mode de réalisation non limitatif de celle-ci, en liaison avec la figure unique sur laquelle est représenté un schéma bloc de la boucle de régulation de la température dans un habitacle de véhicule selon l'invention.

Dans la description qui va suivre, il est entendu que le signal Sx est le signal représentant la valeur physique x.

Sur la figure, donnée à titre d'exemple non limitatif, est représenté un schéma-bloc de la boucle de régulation de la température dans un habitacle de véhicule selon l'invention.

Un module de commande du groupe de climatisation 1, comprenant un calculateur et un ensemble de chauffage, ventilation et d'air conditionné (HVAC), permet de faire varier la température régnant dans un habitacle 2 de véhicule automobile, en modifiant la position de volets de mixage d'air soufflé en fonction de valeurs de puissance qui lui sont appliquées.

Dans le mode de réalisation représenté, deux signaux représentatifs des valeurs de puissance sont fournis au module de commande 1. Un premier signal SPstat est représentatif d'une première valeur de puissance dite statique Pstat qui permet de maintenir une température dans l'habitacle 2 au niveau d'une consigne de température θc et un deuxième signal SPdyn est représentatif d'une valeur de puissance dite dynamique Pdyn qui est une valeur de puissance additionnelle qui permet la convergence de la température de l'habitacle θhab, mesurée par une sonde de température intérieure 3 vers la consigne de température θc, lorsque les éléments de l'habitacle 2 rayonnent de la chaleur.

La valeur de puissance statique Pstat est adaptée à la valeur de consigne de température θc, de préférence au moyen d'une table de correspondance T1 prédéterminée. Cette prédétermination peut être réalisée en fixant la température de consigne désirée et en balayant les conditions environnantes telles que la température extérieure et l'ensoleillement ainsi que les températures d'air soufflé, les répartitions et les débits.

La valeur de puissance dynamique Pdyn est déterminée en fonction d'une erreur εc régulée par un régulateur 4, de préférence un régulateur à action proportionnelle-intégrale-dérivée (PID) pour éliminer toute erreur statique. Le régulateur comprend alors avantageusement une table de correspondance T2 prédéterminée. La prédétermination peut être réalisée de manière analogue à celle réalisée pour T1, tout en introduisant une contrainte supplémentaire de convergence d'une température mesurée à un endroit précis de l'habitacle 2, par exemple au niveau de la tête des occupants, dans un temps déterminé.

Ce signal d'erreur Sεc est obtenu en soustrayant un signal de retour Sθhab déterminé à partir de la température régnant à l'intérieur de l'habitacle θhab, à un signal Sθc représentatif de la consigne de température θc par le moyen de comparaison 5.

Selon l'invention, on se propose de supprimer les erreurs de dérive et de reproductibilité sur la valeur du signal de l'erreur de consigne Sεc. Pour cela, on corrige le signal Sθhab, en ajoutant au signal Sθsonde délivré par la sonde de température 3 et représentatif de la température régnant dans l'habitacle θhab, un signal d'erreur de convergence Sεconv. Cette addition de signaux peut être réalisé par un additionneur.

Le signal d'erreur de convergence Sεcond est régulé par le régulateur 7, de préférence un régulateur PID, et obtenu à la sortie d'un moyen de comparaison 8, en comparant le signal SPdyn à un signal SVconv représentatif d'une valeur de convergence Vconv.

La valeur de convergence Vconv est égale à la valeur à laquelle on souhaite faire converger la valeur de puissance dynamique Pdyn. Généralement, la valeur Vconv est choisie sensiblement égale à la valeur nulle de manière à annuler la valeur de Pdyn fournie au module de commande du groupe de climatisation 1 lorsque la température de l'habitacle θhab est sensiblement égale à la tempéralure visée θhab.

En variante de réalisation, non représentée, on peut prévoir des moyens de variation de la valeur de convergence Vconv dans le temps selon une loi de variation prédéterminée. Cette loi de variation peut alors comprendre comme paramètres la température extérieure et/ou l'ensoleillement ainsi qu'un délai. Il est alors avantageux de ne faire converger la valeur de puissance dynamique Pdyn qu'après une certaine durée d'activation ce celle-ci, durée pour laquelle on peut estimer en fonction de la température extérieure et/ou l'ensoleillement que l'habitacle du véhicule est chambré, c'est-à-dire que les éléments qui y sont présents ne dégagent plus une quantité de chaleur significative.

Pour cela, on peut décider de faire prendre à la valeur de convergence Vconv une valeur sensiblement nulle après un temps prédéterminé, à partir duquel on considère que le chambrage de l'habitacle est réalisé, et que l'on peut n'appliquer que la valeur de puissance statique Pstat au module de commande du groupe de climatisation 1.

## Revendications

1. Système de climatisation pour un véhicule, le système comprenant un module de commande du groupe de climatisation (1) pour réguler la température à l'intérieur d'un habitacle (2) vers une température de consigne (θc), ledit module de commande (1) déterminant la température d'air soufflé à introduire dans l'habitacle (2) en fonction :
- d'un premier signal (SPstat) représentatif de la puissance thermique (Pstat) qu'il faut apporter pour maintenir l'habitacle (2) à la température de consigne (θc) ; et
- d'un deuxième signal (SPdyn) représentatif de la puissance thermique (Pdyn) qu'il faut apporter à l'habitacle (2) pour vaincre l'inertie thermique résultant d'au moins un élément dans l'habitacle (2), ladite valeur de puissance thermique (Pdyn) étant déterminée en soustrayant la température mesurée à l'intérieur de l'habitacle (2) par un moyen d'obtention de température (3) à la température de consigne (θc) ;
le système comprenant des moyens de compensation du deuxième signal (SPdyn) contre des dérives provenant dudit moyen d'obtention de température (3) à l'intérieur de l'habitacle (2) **caractérisé en ce que** les moyens de compensation comprennent un moyen d'addition de signaux (6) pour l'addition d'un signal (Sθsonde) provenant du moyen d'obtention de température (3) avec un signal d'erreur de convergence (Sεconv) représentatif de l'erreur de convergence (εconv) du deuxième signal (SPdyn) pour obtenir un signal de température d'habitacle corrigé (Sθhab).

2. Système de climatisation selon la revendication précédente **caractérisé en ce que** le signal d'erreur de convergence (Sεconv) est régulé par un moyen de régulation (7), de préférence un filtre PID.

3. Système de climatisation selon l'une des revendications précédentes **caractérisé en ce que** le signal d'erreur de convergence (Sεconv) est obtenu par un comparateur (8) faisant la différence entre un signal (SVconv) représentatif d'une valeur de convergence (Vconv) vers laquelle l'on souhaite faire converger le deuxième signal (SPdyn) et le deuxième signal (SPdyn).

4. Système de climatisation selon la revendication précédente **caractérisé en ce que** la valeur de convergence (Vconv) est stockée dans une mémoire du système de climatisation.

5. Système de climatisation selon la revendication 3 ou 4 **caractérisé en ce que** la valeur de convergence (Vconv) est une valeur constante, de préférence une valeur sensiblement nulle.

6. Système de climatisation selon l'une des revendications 3 à 5 **caractérisé en ce que** la valeur de convergence (Vconv) prend une valeur sensiblement nulle après un temps prédéterminé.

7. Système de climatisation selon l'une des revendications 3 ou 6 **caractérisé en ce que** la valeur de convergence (Vconv) est déterminée au moyen d'une loi de commande comprenant comme paramètres au moins une température extérieure à l'habitacle (2) et un délai courant depuis le changement de la température de consigne (θc).

8. Système de climatisation selon l'une quelconque des revendications précédentes **caractérisé en ce que** le deuxième signal (SPdyn) est déterminé en fonction d'un signal d'erreur de consigne (Sεc) régulé par un moyen de régulation (4), de préférence un filtre PID, le signal d'erreur de consigne (Sεc) étant obtenu par comparaison dans un moyen de comparaison (5) entre le signal de consigne (Sθc) et le signal de température d'habitacle corrigé (Sθhab).

9. Procédé de climatisation d'un habitacle de véhicule, dans lequel :
- on fixe une température de consigne (θc) ;
- on détermine une valeur de puissance statique (Pstat) permettant de maintenir l'habitacle (2) à la température de consigne (θc) ;
- on détermine une valeur de puissance dynamique (Pdyn) permettant de vaincre l'inertie thermique résultant d'au moins un élément dans l'habitacle (2) ;
- on applique ces valeurs de puissance statique (Pstat) et dynamique (Pdyn) à un module de commande du groupe de climatisation (1) ;
- on mesure la température de l'habitacle (θhab) à l'aide d'un moyen d'obtention de température (3) à l'intérieur de l'habitacle (2) pour adapter la valeur de puissance dynamique (Pdyn);
- on compense la valeur de puissance dynamique (Pdyn) contre des dérives provenant du moyen d'obtention de température (3) à l'intérieur de l'habitacle (2) en additionnant un signal (Sθsonde) provenant du moyen d'obtention de température (3) avec un signal d'erreur de convergence (Sεconv) représentatif de l'erreur de convergence (εconv) du deuxième signal (SPdyn) pour obtenir un signal de température d'habitacle corrigé (Sθhab).

## Claims

1. Air-conditioning system for a vehicle, the system comprising an air-conditioning unit control module (1) for regulating the temperature inside a passenger compartment (2) toward a setpoint temperature (θc), said control module (1) determining the temperature of blown air to be introduced into the passenger compartment (2) as a function:
- of a first signal (SPstat) representative of the thermal power (Pstat) that has to be supplied in order to keep the passenger compartment (2) at the setpoint temperature (θc); and
- of a second signal (SPdyn) representative of the thermal power (Pdyn) that has to be supplied to the passenger compartment (2) in order to overcome the thermal inertia resulting from at least one element in the passenger compartment (2), said thermal power value (Pdyn) being determined by subtracting the temperature measured inside the passenger compartment (2) by a temperature-obtaining means (3) from the setpoint temperature (θc);
the system comprising means for compensating the second signal (SPdyn) against drifts originating from said means (3) of obtaining the temperature inside the passenger compartment (2), **characterized in that** the compensating means comprise a signal adding means (6) for adding a signal (Sθsonde) originating from the temperature-obtaining means (3) to a convergence error signal (Sεconv) representative of the convergence error (εconv) of the second signal (SPdyn) in order to obtain a corrected passenger compartment temperature signal (Sθhab).

2. Air-conditioning system according to the preceding claim, **characterized in that** the convergence error signal (Sεconv) is regulated by a regulating means (7), preferably a PID filter.

3. Air-conditioning system according to either of the preceding claims, **characterized in that** the convergence error signal (Sεconv) is obtained by a comparator (8) that calculates the difference between a signal (SVconv) representative of a convergence value (Vconv), toward which it is desired for the second signal (SPdyn) to converge, and the second signal (SPdyn).

4. Air-conditioning system according to the preceding claim, **characterized in that** the convergence value (Vconv) is stored in a memory of the air-conditioning system.

5. Air-conditioning system according to Claim 3 or 4, **characterized in that** the convergence value (Vconv) is a constant value, preferably a substantially zero value.

6. Air-conditioning system according to one of Claims 3 to 5, **characterized in that** the convergence value (Vconv) adopts a substantially zero value after a set length of time.

7. Air-conditioning system according to either of Claims 3 and 6, **characterized in that** the convergence value (Vconv) is determined by means of a control law which comprises, by way of parameters, at least one temperature external to the passenger compartment (2) and a current delay since the setpoint temperature (θc) was changed.

8. Air-conditioning system according to any one of the preceding claims, **characterized in that** the second signal (SPdyn) is determined as a function of a setpoint error signal (Sεc) regulated by a regulating means (4), preferably a PID filter, the setpoint error signal (Sεc) being obtained by comparison in a comparison means (5) that compares the setpoint signal (Sθc) with the corrected passenger compartment temperature signal (Sθhab).

9. Method of air-conditioning a vehicle passenger compartment, in which:
- a setpoint temperature (θc) is fixed;
- a static power value (Pstat) that will allow the passenger compartment (2) to be kept at the setpoint temperature (θc) is determined;
- a dynamic power value (Pdyn) that will make it possible to overcome the thermal inertia resulting from at least one element in the passenger compartment (2) is determined;
- these static power (Pstat) and dynamic power (Pdyn) values are applied to an air-conditioning unit control module (1);
- the passenger compartment temperature (θhab) is measured using a means (3) of obtaining the temperature inside the passenger compartment (2) in order to adapt the dynamic power value (Pdyn);
- the dynamic power value (Pdyn) is compensated against drifts originating from the means (3) of obtaining the temperature inside the passenger compartment (2) by adding a signal (Sθsonde) originating from the temperature-obtaining means (3) to a convergence error signal (Sεconv) representative of the convergence error (εconv) of the second signal (SPdyn) in order to obtain a corrected passenger compartment temperature signal (Sθhab).

## Patentansprüche

1. Klimatisierungssystem für ein Fahrzeug, wobei das System ein Steuermodul für die Klimatisierungsgruppe (1) umfasst, um die Temperatur innerhalb eines Fahrgastraums (2) auf eine Solltemperatur (θc) zu regulieren, wobei das Steuermodul (1) die in den Fahrgastraum (2) einzuleitende Gebläseluft bestimmt als Funktion:
- eines ersten Signals (SPstat), das die Wärmeleistung (Pstat) repräsentiert, die eingebracht werden muss, um den Fahrgastraum (2) auf der Solltemperatur (θc) zu halten; und
- eines zweiten Signals (SPdyn), das die Wärmeleistung (Pdyn) repräsentiert, die in den Fahrgastraum (2) eingebracht werden muss, um die thermische Trägheit zu überwinden, die sich aus wenigstens einem Element in dem Fahrgastraum (2) ergibt, wobei der Wärmeleistungswert (Pdyn) bestimmt wird, indem die innerhalb des Fahrgastraums (2) durch ein Temperaturgewinnungsmittel (3) gemessene Temperatur von der Solltemperatur (θc) subtrahiert wird;
wobei das System Mittel für den Ausgleich des zweiten Signals (SPdyn) gegenüber Drifts, die von dem Temperaturgewinnungsmittel (3) in dem Fahrgastraum (2) stammen, umfasst, **dadurch gekennzeichnet, dass** die Ausgleichsmittel ein Signaladditionsmittel (6) umfassen, um ein von dem Temperaturgewinnungsmittel (3) stammendes Signal (Sθsonde) zu einem Konvergenzfehlersignal (Sεconv), das den Konvergenzfehler (εconv) des zweiten Signals (SPdyn) repräsentiert, zu addieren, um ein korrigiertes Fahrgastraum-Temperatursignal (Sθhab) zu erhalten.

2. Klimatisierungssystem nach dem vorhergehenden Anspruch, **dadurch gekennzeichnet, dass** das Konvergenzfehlersignal (Sθconv) durch ein Regulierungsmittel (7), vorzugsweise ein PID-Filter, reguliert wird.

3. Klimatisierungssystem nach einem der vorhergehenden Ansprüche, **dadurch gekennzeichnet, dass** das Konvergenzfehlersignal (Sεconv) durch einen Komparator (8) erhalten wird, der die Differenz zwischen einem Signal (SVconv), das einen Konvergenzwert (Vconv) repräsentiert, zu dem das zweite Signal (SPdyn) konvergieren soll, und dem zweiten Signal (SPdyn) bildet.

4. Klimatisierungssystem nach dem vorhergehenden Anspruch, **dadurch gekennzeichnet, dass** der Konvergenzwert (Vconv) in einem Speicher des Klimatisierungssystems gespeichert ist.

5. Klimatisierungssystem nach Anspruch 3 oder 4, **dadurch gekennzeichnet, dass** der Konvergenzwert (Vconv) ein konstanter Wert ist, vorzugsweise ein Wert, der im Wesentlichen null ist.

6. Klimatisierungssystem nach einem der Ansprüche 3 bis 5, **dadurch gekennzeichnet, dass** der Konvergenzwert (Vconv) nach einer vorgegebenen Zeit einen Wert annimmt, der im Wesentlichen gleich null ist.

7. Klimatisierungssystem nach einem der Ansprüche 3 oder 6, **dadurch gekennzeichnet, dass** der Konvergenzwert (Vconv) mittels eines Steuergesetzes bestimmt wird, das als Parameter mindestens eine Temperatur außerhalb des Fahrgastraums (2) und eine abgelaufene Zeitdauer seit der Änderung der Solltemperatur (θc) enthält.

8. System nach einem der vorhergehenden Ansprüche, **dadurch gekennzeichnet, dass** das zweite Signal (SPdyn) als Funktion eines Soll-Fehlersignals (Sεc) bestimmt wird, das durch ein Regulierungsmittel (4), vorzugsweise ein PID-Filter, reguliert wird, wobei das Sollfehlersignal (Sεc) durch Vergleich in einem Vergleichsmittel (5) zwischen dem Sollsignal (Sεc) und dem korrigierten Fahrgastraum-Temperatursignal (Sθhab) erhalten wird.

9. Verfahren zum Klimatisieren eines Fahrzeug-Fahrgastraums, wobei:
- eine Solltemperatur (θc) festgelegt wird;
- ein statischer Leistungswert (Pstat) bestimmt wird, der ermöglicht, den Fahrgastraum (2) auf der Solltemperatur (θc) zu halten;
- ein dynamischer Leistungswert (Pdyn) bestimmt wird, der ermöglicht, die thermische Trägheit zu überwinden, die sich aus wenigstens einem Element in dem Fahrgastraum (2) ergibt;
- diese Werte der statischen Leistung (Pstat) und der dynamischen Leistung (Pdyn) in ein Steuermodul der Klimatisierungsgruppe (1) eingegeben werden;
die Temperatur des Fahrgastraums (θhab) mit Hilfe eines Temperaturgewinnungsmittels (3) in dem Fahrgastraum (2) gemessen wird, um den dynamischen Leistungswert (Pdyn) anzupassen;
- der dynamische Leistungswert (Pdyn) in Bezug auf Drifts kompensiert wird, die von dem Temperaturgewinnungsmittel (3) in dem Fahrgastraum (2) stammen, indem ein von dem Temperaturgewinnungsmittel (3) stammendes Signal (Sθsonde) zu einem Konvergenzfehlersignal (Sεconv), das den Konvergenzfehler (εconv) des zweiten Signals (SPdyn) repräsentiert, addiert wird, um ein korrigiertes Fahrgastraum-Temperatursignal (Sθhab) zu erhalten.
